# EUROPEAN PATENT APPLICATION

(11) **EP 1 798 254 A1**
(43) Date of publication of application: **20.06.2007**
(21) Application number: 05768465.6
(22) Date of filing: 03.08.2005
(51) Int. Cl.: C08J 5/22, C25B 13/08, C08L 27/12

(54) **FLUORINE-CONTAINING ION-EXCHANGE MEMBRANE AND PROCESS FOR PRODUCING FLUOROPOLYMER**

(30) Priority: 04.08.2004 JP 2004228194
(71) Applicant: Asahi Glass Company, Limited, Chiyoda-ku, Tokyo 100-8405 (JP)
(72) Inventor: UMEMURA, Kazuo, c/o Asahi Glass Company, Limited,, Yokohama-shi, Kanagawa 2218755 (JP); SHIMOHIRA, Tetsuji, c/o Asahi Glass Company, Ltd., Yokohama-shi, Kanagawa 2218755 (JP)
(74) Representative: Müller-Boré & Partner Patentanwälte
(86) International application number: PCT/JP2005/014234
(87) International publication number: WO 2006/013903

(57) **Abstract**

To provide an ion exchange membrane capable of stably developing a high current efficiency in electrolysis of an aqueous alkali chloride solution containing organic substances and thereby capable of producing an aqueous alkali hydroxide solution stably with high efficiency.

A fluorinated ion exchange membrane containing at least one layer of a fluoropolymer having a pendant side chain structure having a carboxylic acid group bonded to the polymer main chain by means of a connecting chain, wherein the connecting chain up to the carboxylic acid group in the pendant side chain is a continuous chain composed of from 6 to 8 atoms, and the connecting chain has a diether structure with no branched structure.

## Description

### TECHNICAL FIELD

The present invention relates to a fluorinated ion exchange membrane and a process for producing a fluoropolymer.

### BACKGROUND ART

An alkali chloride electrolysis method by an ion exchange membrane which comprises electrolysis of an aqueous alkali chloride solution using a fluorinated cation exchange membrane as a diaphragm to produce an alkali hydroxide and chlorine has been known. As the ion exchange membrane to be used in this method, a fluorinated cation exchange membrane made of a fluoropolymer having carboxylic acid groups (see Patent Document 1), a fluorinated cation exchange membrane comprising at least two layers of a layer made of a fluoropolymer having sulfonic acid groups and a layer made of a fluoropolymer having carboxylic acid groups (see Patent Document 2) and the like have been known.

In the above alkali chloride electrolysis method, it is very important to suppress the amount of impurities in the aqueous alkali chloride solution to be low so as to maintain favorable operation performance for a long period of time, and it has been known to subject the aqueous alkali chloride solution to purification treatment or the like and then supply it to an electrolytic cell.

However, there is no effective removal method with respect to some impurities particularly organic impurities, and accordingly impurities at a high concentration are included in many cases, whereby the current efficiency of the ion exchange membrane significantly reduces and the electrolysis voltage significantly increases.
Patent Document 1: JP-A-52-153897
Patent Document 2: JP-A-2000-1794

### DISCLOSURE OF THE INVENTION

### OBJECT TO BE ACCOMPLISHED BY THE INVENTION

It is an object of the present invention to provide a fluorinated ion exchange membrane capable of stably providing a high current efficiency in electrolysis of an aqueous alkali chloride solution containing organic substances and to provide a process for producing a fluoropolymer useful for such a fluorinated ion exchange membrane.

### MEANS TO ACCOMPLISH THE OBJECT

The present invention provides a fluorinated ion exchange membrane containing at least one layer of a fluoropolymer having a pendant side chain structure having a carboxylic acid group bonded to the polymer main chain by means of a connecting chain, wherein the connecting chain up to the carboxylic acid group in the pendant side chain is a continuous chain composed of from 6 to 8 atoms, and the connecting chain has a diether structure with no branched structure.

The present invention further provides a process for producing a fluoropolymer, which comprises polymerizing a fluoroolefin represented by the formula 3 (in the formula 3, each of X¹ and X² which are independent of each other, is a fluorine atom, a chlorine atom, a hydrogen atom or a trifluoromethyl group) with a fluoromonomer represented by the formula 4 (in the formula 4, n is an integer of from 2 to 4, and Y is a precursor group capable of being converted to a carboxylic acid group (a group represented by -COOM, and M is a hydrogen atom or an alkali metal atom) by hydrolysis) in an aqueous medium:

CF₂=CX¹X² formula 3

CF₂=CFO (CF₂)ₙO (CF₂)₂Y formula 4

### EFFECTS OF THE INVENTION

The fluoropolymer in the present invention has a large cluster structure since the connecting chain up to the carboxylic acid group in the pendant side chain has a diether structure with no branched structure, whereby the side chain has high motility. An ion exchange membrane made of this fluoropolymer develops excellent electrochemical properties such as a high current efficiency and a low electric resistance in an environment where the water content in the membrane is low, such as in a high concentration alkali or low temperature environment, and this is considered to be because the membrane can maintain a large amount of water. Further, when an ion exchange membrane made of the fluoropolymer is used, it is possible to produce an aqueous alkali hydroxide solution stably with high efficiency for a long period of time, even when an aqueous alkali chloride solution to be subjected to electrolysis contains impurities which will decrease the water content of the membrane by deposition, particularly impurities such as organic substances.

Further, since the above connecting chain has no branched structure, an ion exchange membrane made of such a fluoropolymer can develop high mechanical strength since no constrained stress will be applied to the main chain skeleton.

### BEST MODE FOR CARRYING OUT THE INVENTION

The fluorinated ion exchange membrane of the present invention has at least one layer of a fluoropolymer having a pendant side chain structure having a carboxylic acid group bonded to the polymer main chain by means of a connecting chain. The connecting chain up to the carboxylic acid group in the pendant side chain is a continuous chain composed of from 6 to 8 atoms, and the connecting chain has a diether structure with no branched structure. If the number of atoms in the connecting chain is smaller than 6, the membrane properties may decrease with time when impurities are contained in a liquid to be treated such as an aqueous sodium chloride solution. If it is larger than 8, a membrane with a high ion exchange capacity is hardly obtained. Particularly, the continuous chain is preferably a continuous chain composed of 7 atoms.

The fluoropolymer is preferably one containing polymerized units based on a monomer represented by the following formula 1, particularly one containing polymerized units based on a monomer represented by the following formula 2. In the formula 1, n is an integer of from 2 to 4, and in the formulae 1 and 2, M is a hydrogen atom or an alkali metal atom.

CF₂=CFO (CF₂)ₙO(CF₂)₂COOM formula 1

CF₂=CFO (CF₂)₃O(CF₂)₂COOM formula 2

The fluoropolymer preferably further contains at least one type of polymerized units based on a fluoroolefin represented by the formula 3.

CF₂=CX¹X² formula 3

The fluoroolefin represented by the formula 3 is preferably CF₂=CF₂, CF₂=CF(CF₃), CF₂=CH₂, CF₂=CFH or CF₂=CFCl, and in a case where the fluorinated ion exchange membrane is used for electrolysis of an aqueous alkali chloride solution, CF₂=CF₂ is particularly preferred in view of durability against chlorine to be generated during the electrolysis.

The ion exchange capacity of the fluoropolymer is preferably from 0.6 to 1.2 mmol/g dry polymer. If the ion exchange capacity exceeds the above range, the current efficiency tends to be low, and if it is less than the above range, the electrical resistance of the membrane tends to be high. The ion exchange capacity is particularly preferably from 0.7 to 1.0 mmol/g.

The fluorinated ion exchange membrane of the present invention contains at least one layer of the above fluoropolymer having the pendant side chain structure, and in a case where it is used for production of an aqueous alkali hydroxide solution by alkali chloride electrolysis, it is preferred to use a fluorinated ion exchange membrane comprising a first layer made of the above fluoropolymer having the pendant side chain structure and a second layer made of a fluoropolymer having sulfonic acid groups laminated.

The thickness of the fluorinated ion exchange membrane of the present invention is, in a case where the membrane comprises only the first layer of the fluoropolymer having the pendant side chain structure, preferably from 30 to 500 µm.

Further, in a case where the fluorinated ion exchange membrane comprises a first layer made of the fluoropolymer having the pendant side chain structure and a second layer made of a fluoropolymer having sulfonic acid groups laminated, the thickness of the first layer is preferably at least 10 µm and at most 50 µm. In a case where the fluorinated ion exchange membrane of the present invention is used for production of an aqueous alkali hydroxide solution by alkali chloride electrolysis, if the thickness of the first layer is less than 10 µm, the concentration of alkali chloride in the cathode transmitted from the anode side tends to increase, and the quality of alkali hydroxide as a product may be impaired. On the other hand, if the thickness of the first layer exceeds 50 µm, the electrical resistance of the membrane tends to be high. The thickness of the first layer is particularly preferably from 15 to 30 µm.

Further, the thickness of the second layer is preferably from 15 to 500 µm in view of the membrane strength and the membrane resistance.

The fluoropolymer which constitutes the second layer made of a fluoropolymer having sulfonic acid groups, may be one which is a copolymer of at least one fluoroolefin represented by the formula 3 with at least one fluoromonomer represented by the following formula 4 and which has the precursor group A of the sulfonic acid group converted to a sulfonic acid group:

CF₂=CF (OCF₂CFX³)ₛO (CF₂)ₜ-A formula 4

In the formula 4, X³ is a fluorine atom or a trifluoromethyl group, s is an integer of from 0 to 2, t is an integer of from 1 to 3, and A is a precursor group capable of being converted to a sulfonic acid group (represented by -SO₃M and M is as defined for the formula 1) hydrolysable in an alkaline solvent.

In the case of the fluoropolymer constituting the second layer, the fluoroolefin represented by the formula 3 is preferably CF₂=CF₂, CF₂=CF(CF₃), CF₂=CH₂, CF₂=CFH or CF₂=CFCl, particularly preferably CF₂=CF₂.

Further, the following may be mentioned as a preferred fluoromonomer represented by the formula 4.
CF₂=CFOCF₂CF (CF₃) OCF₂CF₂SO₂F
CF₂=CFOCF₂CF₂SO₂F
CF₂=CFOCF₂CF₂CF₂SO₂F
CF₂=CF(OCF₂CF(CF₃))₂OCF₂CF₂SO₂F

The fluorinated ion exchange membrane of the present invention may be used as it is, but it is preferred to apply a treatment for chlorine gas release to at least one surface of the ion exchange membrane, particularly preferably to at least the surface on the anode side of the ion exchange membrane, whereby the long term stability of the current efficiency will further be improved.

The method to apply a treatment for gas release to the surface of an ion exchange membrane may, for example, be a method of applying roughing to the membrane surface (US4426271, JP-B-60=26495), a method of supplying a liquid containing an iron compound, zirconium oxide and the like to an electrolytic cell to attach a gas release coating layer containing hydrophilic inorganic particles to the membrane surface (US4367126, JP-A-56-152980), or a method of providing a porous layer containing a gas and liquid permeable particles having no electrode activity (US4666574, JP-A-56-75583 and JP-A-57-39185). The gas release coating layer on the surface of the ion exchange membrane not only improves the long term stability of the current efficiency but has an effect of further reducing the voltage at the time of the electrolysis.

The fluorinated ion exchange membrane of the present invention can be reinforced by lamination with e.g. a woven fabric, non-woven fibrils or a porous body preferably made of a fluoropolymer such as polytetrafluoroethylene, as the case requires.

The fluoropolymer constituting the first layer of the fluorinated ion exchange membrane of the present invention can be produced by the production process of the present invention, which comprises polymerizing the fluoroolefin represented by the formula 3 with a fluoromonomer represented by the following formula 5:

CF₂=CFO (CF₂) ₙO (CF₂)₂Y formula 5

wherein n is an integer of from 2 to 4, and Y is a precursor group capable of being converted to a carboxylic acid group (a group represented by -COOM, and M is a hydrogen atom or an alkali metal atom) by hydrolysis, in an aqueous medium.

The fluoromonomer represented by the formula 5 may, for example, be CF₂=CFO(CF₂)₂O (CF₂)₂COOCH₃ or CF₂=CFO (CF₂)₃O (CF₂)₂COOCH₃.

CF₂=CFO(CF₂)₃O(CF₂)₂COOCH₃ which is one of the fluoromonomers represented by the formula 4 can be produced, for example, in accordance with the following process.
(1) Hexafluoropropylene oxide (HFPO) is added to FCO(CF₂)₂O(CF₂)₂COF to obtain FCOCF(CF₃)O(CF₂)₃O(CF₂)₂COF.
(2) CF₂=CFO(CF₂)₃O(CF₂)₂COF is obtained by pyrolysis of FCOCF (CF₃) O(CF₂)₃O (CF₂) ₂COF.
(3) Methanol is added to CF₂=CFO(CF₂)₃O(CF₂)₂COF to obtain CF₂=CFO (CF₂)₃O (CF₂)₂COOCH₃.

In the case of the polymerization in an aqueous medium, the reaction pressure is selected preferably from a range of from 1×10⁵ to 5×10⁶ Pa, particularly preferably from 3×10⁵ to 3×10⁶ Pa. If the reaction pressure is lower than 1×10⁵ Pa, no sufficient reaction rate is likely to be obtained, whereby a copolymer having a desired molecular weight will hardly be obtained. On the other hand, the reaction pressure is selected preferably from a range of at most 5×10⁶ Pa considering the reaction apparatus and the operation efficiency in industrial application. The reaction temperature may suitably be selected depending upon the type of the polymerization initiation source, the reaction molar ratio, etc. but is selected usually from 10 to 90°C, preferably from 20 to 80°C.

The polymerization initiator is preferably one having high activity in the above suitable reaction temperature. Usually, an azo compound or a peroxy compound is used and in addition, ionizing radiation with high activity at room temperature or below may also be used. Specifically, preferred is a diacyl peroxide such as disuccinic acid peroxide, benzoyl peroxide, lauroyl peroxide or bispentafluoropropionyl peroxide, an azo compound such as 2,2-azobis(2-amidinopropane)hydrochloride, 4,4-azobis(4-cyanovalerianic acid) or azobisisobutyronitrile, a peroxy ester such as t-butyl peroxyisobutyrate or t-butyl peroxypivalate, a peroxydicarbonate such as diisopropyl peroxydicarbonate or bis-2-ethylhexyl peroxydicarbonate, a hydroperoxide such as diisopropylbenzene hydroperoxide, an inorganic peroxide such as potassium persulfate or ammonium persulfate, or a redox compound thereof.

The concentration of the polymerization initiator is preferably from 0.0001 to 3 parts by mass, particularly preferably from 0.001 to 2 parts by mass based on the total amount of the monomers. If the concentration of the initiator is too low, the molecular weight of the obtained copolymer tends to be too high, whereby heat forming will be difficult. Further, the productivity will decrease as the polymerization rate tends to be low. On the other hand, if the concentration of the initiator is too high, the molecular weight tends to decrease, and a copolymer having a high molecular weight with a high ion exchange capacity is less likely to be obtained.

Further, at the time of the polymerization in an aqueous medium, a surfactant, a dispersant, a buffering agent, a molecular weight modifier, etc. may be added to the reaction system, as the case requires.

The surfactant may, for example, be a potassium salt, a sodium salt or an ammonium salt of perfluorosulfonic acid or perfluorocarboxylic acid, and it is particularly preferably a perfluorocarboxylic acid type surfactant such as C₆F₁₃COONH₄, C₇F₁₅COONH₄ or CₐF₁₇COONH₄ .

Further, it is preferred to control the polymerization so that the concentration of the formed copolymer is at most 40 mass%, particularly at most 30 mass% in the reaction liquid. If the concentration is too high, the load at the time of stirring tends to increase and in addition, problems are likely to arise such as difficulty in removal of heat, and insufficient dispersion of the monomers.

The fluoropolymer constituting the first layer of the fluorinated ion exchange membrane of the present invention can be produced also by polymerizing the fluoroolefin represented by the formula 3 with the fluoromonomer represented by the formula 4 in a solution such as a fluorine type solvent.

The fluorinated ion exchange membrane of the present invention can be produced, for example, in accordance with the following process. First, a fluoropolymer having precursor groups of carboxylic acid groups and a fluoropolymer having precursor groups of sulfonic acid groups are separately prepared, and these polymers are formed into a film by coextrusion. Then, on the obtained film, as the case requires, a woven fabric for reinforcing, another film made of a fluoropolymer having precursor groups of sulfonic acid groups, or the like is laminated by roll pressing to obtain a laminated membrane. Then, the obtained laminated membrane is immersed in an alkaline solvent so that the precursor groups of carboxylic acid groups and the precursor groups of sulfonic acid groups are hydrolyzed to obtain a fluorinated cation exchange membrane.

By use of the fluorinated ion exchange membrane of the present invention as a diaphragm between an anode chamber and a cathode chamber, alkali chloride electrolysis can be carried out stably for a long period of time. In such a case, the electrolytic cell may be either a monopolar type or a bipolar type. Further, as a material constituting the electrolytic cell, for the anode chamber, one which is resistant to an aqueous alkali chloride solution and chlorine, such as titanium, is used, and for the cathode chamber, stainless steel or nickel, which is resistant to sodium hydroxide and hydrogen, may, for example, be used. In a case where electrodes are disposed in the present invention, the cathode may be disposed to be in contact with the ion exchange membrane or with a suitable distance.

Further, alkali chloride electrolysis using the fluorinated ion exchange membrane of the present invention can be carried out under known conditions, and in a case where the alkali chloride is salt, an aqueous sodium hydroxide solution at a concentration of from 20 to 40 mass% can be produced, for example, by operation at a temperature of from 50 to 120°C at a current density of from 0.5 to 8 kA/m², preferably from 1 to 6 kA/m².

### EXAMPLES

Now, Examples and Comparative Example of the present invention are described below.

### EXAMPLE 1

### (Example 1-1) Example for preparation of FCOCF(CF₃)O(CF₂)₃O(CF₂)₂COF by addition reaction of FCO(CF₂)₂O(CF₂)₂COF with HFPO

Dehydrated and dried CsF (30 g) was loaded into a 2 L hastelloy C reactor, and the reactor was deaerated. In this reactor, FCO(CF₂)₂O(CF₂)₂COF (1,245 g) and tetraglyme (153 g) were charged, the reactor was cooled to -20°C, and HFPO (674 g) was continuously supplied while the supply amount was controlled so that the reaction temperature would not be 0°C or higher. After completion of the reaction, FCOCF(CF₃)O(CF₂)₃O(CF₂)₂COF (lower layer) (1,836 g) was recovered by a separatory funnel. The recovered product was analyzed by ¹⁹F-NMR and EI-MS and the results are as follows.

¹⁹F-NMR (282.7 MHz, solvent: CDCl₃, standard: CFCl₃) δ (ppm): 26.4 (1F), 24.6 (1F), -78.5 (1F), -81.6.(3F), -82.2 (2F), -85.0 (2F), -86.0 (IF), -120.7 (2F), -128.3 (2F) , -130.1 (1F).
EI-MS; 313, 166.

### (Example 1-2) Example for preparation of CF₂=CFO(CF₂)₃O(CF₂)₂COF by pyrolysis of FCOCF(CF₃) O (CF₂)₃O (CF₂)₂COF

A tubular fluidized bed reactor (inner diameter 100 mm, length 500 mm, made of SUS) packed with glass beads (3500 ml, mean particle size 160 µm, specific gravity 1.47 g/mL) was heated to an internal temperature of 275°C with a tubular mantle heater. A glass trap cooled with dry ice was provided at the outlet of the tubular reactor.

Then, nitrogen gas (14.7 mol/h), FCOCF(CF₃)O(CF₂)₃O(CF₂)₂COF (0.94 mol/h, 447 g/h) prepared in Example 1-1 and distilled water (1.5 g/h) were mixed and heated to 150°C and vaporized, and the resulting gas mixture was introduced to the tubular reactor from the bottom and brought into contact with the glass beads to cause reaction. After 1,788 g of the starting material was fed during 4 hours of the reaction, the feeding of the starting material and distilled water was stopped, while nitrogen only was fed, for baking of glass beads. After the baking, CF₂=CFO(CF₂)₃O(CF₂)₂COF distillate (1,364 g) collected in the glass trap was recovered. Analysis of the liquid by gas chromatography, ¹⁹F-NMR and EI-MS revealed formation of the title compound in a yield of 71.0%.

¹⁹F-NMR (282.7 MHz, solvent: CDCl₃, standard: CFCl₃) δ (ppm): 24.6 (1F), -83.4 (2F), -85.2 (2F), -85.3 (2F), -112.5 (1F), -120.8 (2F), -121.0 (1F), -128.5 (2F), -134.7 (1F).

EI-MS; 410 (M⁺).

### (Example 1-3) Example for preparation of CF₂=CFO (CF₂)₃O (CF₂)₂COOCH₃ by addition of methanol to CF₂=CFO (CF₂)₃O(CF₂) ₂COF

CF₂=CFO(CF₂)₃O(CF₂)₂COF (2,200 g) prepared in Example 1-2 was loaded into a 2 L hastelloy C reactor, and methanol (190 g) was introduced gradually while the inside of the reactor was maintained at 30°C or below under normal pressure by cooling the reactor. At the same time, the reaction solution was bubbled with nitrogen gas with sufficient stirring, to expel HF resulting from the reaction. After all the methanol had been fed, the reaction solution was bubbled with nitrogen gas at 30°C for another 12 hours, and as a result, 2,260 g of the product was obtained. The product was identified as CF₂=CFO(CF₂)₃O(CF₂)₂COOCH₃ by analysis by ¹⁹F-NMR, ¹³C-NMR, C-F 2D NMR and GC-MS spectrometry (EI detection, CI detection).

¹⁹F-NMR (282.7 MHz: solvent: CDCl₃: standard: CFCl₃) δ (ppm): -84.1 (2F, tt, 12.2 Hz, 6.1 Hz), -85.7 (2F, m), -85.9 (2F, t, 12.2 Hz), -114.3 (1F, dd, 85 Hz, 66 Hz), -122.0 (2F, s), -122.3 (1F, ddt, 113 Hz, 85 Hz, 6 Hz), -129.5 (2F, s), -135.9 (1F, ddt, 113 Hz, 66 Hz, 6 Hz).

¹³C-NMR (282.7 MHz, solvent: CDCl₃, standard: CDCl₃) δ (ppm): 54.1, 106.5, 107.2, 115.7, 116.2, 116.3, 129.8, 147.4, 158.9.

C-F 2D NMR was also used for assignment of each peak.
CI-MS (methane); 423 (M+1).
EI-MS; 325 (M-CF₂CFO).

### (Example 1-4) Preparation of fluoropolymer having carboxylic acid type ion exchange groups

Into a stainless steel pressure resistant container having an internal capacity of 20,000 cm³, deionized water (13,700 g), C₈F₁₇COONH₄ (68 g), Na₂HPO₄·12H₂O (68 g), NaHPO₄·2H₂O (40 g), (NH₄)₂S₂O₈ (7.6 g) and n-hexane (1.1 g) were charged, and then CF₂=CFO(CF₂)₃O(CF₂)₂COOCH₃ (2,063 g) was charged. After sufficient deaeration, the temperature in the container was raised to 60°C, and CF₂=CF₂ (tetrafluoroethylene) was introduced to raise the pressure to the predetermined pressure of 0.65 MPa to conduct polymerization reaction. The polymerization reaction was carried out while tetrafluoroethylene was continuously introduced to maintain the predetermined pressure. The reaction was terminated seven hours later, and the obtained latex was aggregated by concentrated sulfuric acid to obtain a polymer.

Then, the polymer was sufficiently washed with water, immersed in methanol at 65°C for 16 hours and dried to obtain 2.5 kg of a copolymer (hereinafter referred to as copolymer A) having an ion exchange capacity of 0.90 mmol/g.

### (Example 1-5) Preparation of fluoropolymer having sulfonic acid type ion exchange groups

Into a stain less steel pressure resistant container having an internal capacity of 20,000 cm³, 1,3-dichloro-1,1,2,2,3-pentafluoropropane (5.92 kg) and AIBN (2,2'-azobisisobutyronitrile, 12 g) were charged, and then CF₂=CFOCF₂CF(CF₃)OCF₂CF₂SO₂F (11.27 kg) was charged. After sufficient deaeration, the temperature in the container was raised to 70°C, and tetrafluoroethylene was introduced to raise the pressure to the predetermined pressure of 1.2 MPa to conduct the polymerization reaction. The polymerization reaction was carried out while tetrafluoroethylene was continuously introduced to maintain the predetermined pressure. The reaction was terminated nine hours later, and the obtained latex was aggregated by using CFCl₂CH₃ to obtain a polymer. The polymer was dried to obtain 2.6 kg of a copolymer (hereinafter referred to as copolymer B) having an ion exchange capacity of 1.00 mmol/g.

### (Example 1-6) Preparation of ion exchange membrane

The copolymer A and the copolymer B were melted and formed by coextrusion into a two-layer structure film (hereinafter referred to as film AB) comprising a layer (hereinafter referred to as layer A) made of the copolymer A with a thickness of 25 µm and a layer (hereinafter referred to as layer B) made of the copolymer B with a thickness of 65 µm. Further, the copolymer B was formed by melt extrusion into a film (hereinafter referred to as film B) with a thickness of 20 µm.

Separately, a monofilament polytetrafluoroethylene (PTFE) thread obtained by quick orientation of a PTFE film and slitting it into a size of 100 denier, and a multifilament PET thread obtained by twisting six 5 denier polyethylene terephthalate (PET) fibers, were prepared. A woven fabric with a thread density of 30 threads/cm was obtained by plain-weaving in alternate arrangement at a rate of two PET threads per one PTFE thread. This woven fabric was flattened by using a roll pressing machine to the woven fabric thickness of about 80 µm.

The film AB, the film B, the above woven fabric and a mold-release PET film were overlayed in the order of the film B, the woven fabric, the film AB (so that the layer A was on the mold-release PET film side) and the mold-release PET film (thickness 100 µm), and laminated by means of rolls. Then, the mold-release PET film was peeled off to obtain a reinforced laminated membrane.

Then, a paste comprising 29.0 mass% of zirconium oxide having an average particle size of 1 µm, 1.3 mass% of methylcellulose, 4.6 mass% of cyclohexanol, 1.5 mass% of cyclohexane and 63.6 mass% of water was transferred by roll pressing to the film B side of the laminated membrane to attach a gas release coating layer. The amount of zirconium oxide attached was 20 g/m².

Then, the obtained membrane was immersed in an aqueous solution containing 30 mass% of dimethylsulfoxide and 15 mass% of potassium hydroxide at 90°C for 30 minutes, so that -CO₂CH₃ groups and -SO₂F groups are hydrolyzed and converted into ion exchange groups.

Further, a dispersion liquid having 13 mass% of zirconium oxide having an average particle size of 1 µm dispersed in an ethanol solution containing 2.5 mass% of an acid type polymer of the copolymer B was prepared, and this dispersion liquid was sprayed on the film A side of the above laminated membrane to attach a gas release coating layer. The amount of zirconium oxide attached was 4 g/m².

A fluorinated cation exchange membrane having a gas release coating layer formed on each side was obtained as mentioned above.

### (Example 1-7) Salt electrolysis test

The fluorinated cation exchange membrane obtained in Example 1-6 was disposed so that the film AB faced the cathode in an electrolytic cell to carry out electrolysis of an aqueous sodium chloride solution. Electrolysis was carried out by using an electrolytic cell (height 15 cm, width 10 cm) with an effective conducting area of 1.5 dm², and the inlet of water to be supplied was disposed at the lower portion of the cathode chamber, and the outlet of the formed aqueous sodium hydroxide solution was disposed at the upper portion of the cathode chamber. As an anode, one comprising titanium punched metal (minor axis 4 mm, major axis 8 mm) covered with a solid solution of ruthenium oxide, iridium oxide and titanium oxide was used, and as a cathode, SUS304 punched metal (minor axis 5 mm, major axis 10 mm) having ruthenium-containing Raney nickel electrodeposited thereon was used.

The electrolysis was carried out for one week under conditions at a temperature of 90°C at a current density of 4 kA/m² while the cathode side was in a pressurized state so that the anode and the fluorinated cation exchange membrane were in contact with each other, 290 g/L of an aqueous sodium chloride solution was supplied to the anode chamber and water to the cathode chamber, and the concentration of sodium chloride discharged from the anode chamber was kept at 200 g/L and the concentration of sodium hydroxide discharged from the cathode chamber to 32 mass%. During the electrolysis, the current efficiency was kept substantially constant at 97.0%. Further, to the aqueous sodium chloride solution to be supplied, 10 ppm of n-dodecyltrimethylammonium chloride as a model substance of organic impurities was added, and electrolysis was carried out for 4 hours under the same conditions as above and as a result, the current efficiency was kept substantially constant at 97.3%.

### COMPARATIVE EXAMPLE 1

A fluorinated cation exchange membrane was obtained in the same manner as in Example 1 except that a copolymer of CF₂=CF₂ with CF₂=CFO(CF₂)₃COOCH₃ having an ion exchange capacity of 0.95 mmol/g was used as the copolymer A, and electrolysis of sodium chloride was carried out under the same conditions as in Example 1. The current efficiency for the first week was 97.1% and was substantially the same as the current efficiency in Example 1, but one week after addition of 10 ppm of n-dodecyltrimethylammonium chloride to the aqueous sodium chloride solution, the current efficiency decreased to 93.5%.

### INDUSTRIAL APPLICABILITY

The fluorinated ion exchange membrane of the present invention can be used for production of an aqueous alkali hydroxide solution by alkali chloride electrolysis and further, it can be used for a diaphragm for various cells, a member for an actuator, and the like.

The entire disclosure of Japanese Patent Application No. 2004-228194 filed on August 4, 2004 including specification, claims, drawing and summary is incorporated herein by reference in its entirety.

## Claims

1. A fluorinated ion exchange membrane containing at least one layer of a fluoropolymer having a pendant side chain structure having a carboxylic acid group bonded to the polymer main chain by means of a connecting chain, wherein the connecting chain up to the carboxylic acid group in the pendant side chain is a continuous chain composed of from 6 to 8 atoms, and the connecting chain has a diether structure with no branched structure.

2. The fluorinated ion exchange membrane according to Claim 1, wherein the fluoropolymer having the pendant side chain structure contains polymerized units based on a monomer represented by the following formula 1:
CF₂₌CFO (CF₂)ₙO(CF₂)₂COOM formula 1
wherein n is an integer of from 2 to 4, and M is a hydrogen atom or an alkaline metal atom.

3. The fluorinated ion exchange membrane according to Claim 1, wherein the fluoropolymer having the pendant side chain structure contains polymerized units based on a monomer represented by the following formula 2:
CF₂=CFO (CF₂)₃O(CF₂)₂COOM formula 2
wherein M is a hydrogen atom or an alkaline metal atom.

4. The fluorinated ion exchange membrane according to Claim 1, 2 or 3, wherein the fluoropolymer having the pendant side chain structure further contains polymerized units based on a fluoroolefin represented by the following formula 3:
CF₂=CX¹X² formula 3
wherein each of X¹ and X² which are independent of each other, is a fluorine atom, a chlorine atom, a hydrogen atom or a trifluoromethyl group.

5. The fluorinated ion exchange membrane according to Claim 4, wherein the fluoroolefin represented by the formula 3 is tetrafluoroethylene.

6. The fluorinated ion exchange membrane according to any one of Claims 1 to 5, which comprises a first layer made of the above fluoropolymer having the pendant side chain structure and a second layer made of a fluoropolymer having sulfonic acid groups laminated.

7. The fluorinated ion exchange membrane according to Claim 6, wherein the second layer is made of a polymer which is a copolymer of at least one fluoroolefin represented by the formula 3 with at least one fluoromonomer represented by the following formula 4:
CF₂=CF (OCF₂CFX³)ₛO (CF₂)ₜ-A formula 4
wherein X³ is a fluorine atom or a trifluoromethyl group, s is an integer of from 0 to 2, t is an integer of from 1 to 3, and A is a precursor group capable of being converted to a sulfonic acid group (represented by -SO₃M, and M is as defined for the formula 1) hydrolysable in an alkaline solvent) and which has the precursor group A of the sulfonic acid group converted to a sulfonic acid group.

8. A process for producing a fluoropolymer, which comprises polymerizing a fluoroolefin represented by the formula 3 and a fluoromonomer represented by the following formula 5:
CF₂=CFO (CF₂)ₙO (CF₂)₂Y formula 5
wherein n is an integer of from 2 to 4, and Y is a precursor group capable of being converted to a carboxylic acid group (a group represented by -COOM, and M is a hydrogen atom or an alkali metal atom) by hydrolysis, in an aqueous medium.

9. The process for producing a fluoropolymer according to Claim 8, wherein the fluoromonomer represented by the formula 5 is CF₂=CFO(CF₂)₂O(CF₂)₂COOCH₃ or CF₂=CFO(CF₂)₃O(CF₂)₂COOCH₃.

10. A method for producing an aqueous alkali hydroxide solution, which comprises alkali chloride electrolysis by using the fluorinated ion exchange membrane as defined in Claim 6 or 7.
